# EUROPEAN PATENT APPLICATION

(11) **EP 4 557 222 A1**
(43) Date of publication of application: **21.05.2025**
(21) Application number: 23210080.0
(22) Date of filing: 15.11.2023
(51) Int. Cl.: G06T 11/00, G06T 5/60, G06T 11/60

(54) **GENERATING AND USING SYNTHETIC TRAINING DATA**

(71) Applicant: Koninklijke Philips N.V., 5656 AG Eindhoven (NL)
(72) Inventor: TSANDA, Artyom, Eindhoven (NL); SOSSIN, Artur, Eindhoven (NL)
(74) Representative: Philips Intellectual Property & Standards

(57) **Abstract**

A computer-implemented method for generating synthetic training data for training a machine learning algorithm (1) of a software module, wherein the software module is configured for image processing of images acquired by a medical imaging modality, the method comprising the following steps:
(a) receiving a ground truth image (5) that is at least partially obtained from image data acquired by an improved variant of the medical imaging modality or another technique than the medical imaging modality, in particular from natural image (3) data;
(b) artificially downgrading the image quality of the ground truth image (5) to obtain an input training image (6); and
(c) providing the input training image (6) together with the ground truth image (5) as a training pair for the training data.

## Description

### FIELD OF THE INVENTION

The invention relates to a computer-implemented method for generating synthetic training data, a method for generating training weights, training weights, a software module, a use of a software module, and an image processing device.

### BACKGROUND OF THE INVENTION

Computed Tomography (CT) is a widely used medical imaging modality that typically images cross sections of a patient's body. During image acquisition the patient is irradiated with X-rays which are then measured by a detector unit after traversing the patient. Recovering information about the scanned volume as well as image reconstruction is an important factor, e.g. when aiming to lower an X-ray dose level applied to the patient as well as to improve the final image quality. In order to improve these processes, machine learning algorithms, e.g. based on Convolutional Neural Networks (CNNs), are applied. However, machine learning algorithms have to be trained with training data during a training phase. In particular, large amounts of training data are often needed to achieve good results.

The requirement for training data often hinders development, since the amount of available CT image data is limited, e.g. due to privacy regulations concerning the access to medical data, such as the General Data Protection Regulation (GDPR) of the European Union. Furthermore, due to negative effects of X-ray radiation on the human body, the production of CT image data is further limited. Especially on high-resolution CT systems the X-ray dose has to be increased substantially to obtain a sufficient signal-to-noise ratio (SNR), which is only possible up to a certain point. Hence, training data from high-resolution CT systems will typically be limited in quality, i.e., limited either in resolution or SNR. Moreover, other types of image imperfections such as motion may render such training data less valuable.

Hence, collecting a diverse training dataset thus takes a lot of effort and, for some problems, having a sufficient amount and quality of training data may simply not be feasible with state-of-the-art methods. The problem does not only relate to CT training data but, in particular, also to other imaging modalities where potentially harmful radiation, such as X-ray radiation, is applied. Furthermore, the problem of having difficulty to acquire sufficient amounts of training data (e.g. limited due to privacy reasons) can generally apply to image processing related to any imaging modality.

### OBJECT OF THE INVENTION

It is, therefore, an object of the invention to provide a method to better address the above-mentioned problems. Furthermore, it would be desirable to find a solution that allows a sufficient training of machine learning algorithms and to provide a sufficiently trained machine learning algorithm. In particular, it would be desirable to find a method that enables providing more training data.

### SUMMARY OF THE INVENTION

To better address this object, a method according to claim 1, a computer program according to claim 11, a method according to claim 12 and a data processing system according to claim 14 is provided. Advantageous embodiments are set out in the dependent claims. Any features, advantages or alternative embodiments described herein in relation to the claimed method are also applicable to the other claim categories and vice versa.

According to a first aspect, a computer-implemented method for generating synthetic training data for training a machine learning algorithm of a software module is provided. The software module is configured for image processing of images acquired by a medical imaging modality. The medical imaging modality may in particular be a medical imaging modality based on X-rays, such as computed tomography (CT) imaging. The method comprises the following steps:
(a) receiving a ground truth image that is at least partially obtained from image data acquired by an improved variant of the medical imaging modality or another technique than the medical imaging modality, in particular from natural image data;
(b) artificially downgrading the image quality of the ground truth image to obtain an input training image; and
(c) providing the input training image together with the ground truth image as a training pair for the training data.

Advantageously, the inventive method allows to provide training data pairs of images with high quality (i.e., the ground truth image) and lower quality (i.e., the input training image). The inventive method is applicable to different medical imaging modalities, i.e. the training data can be used for training machine learning algorithms that are to improve the quality of images obtained by any imaging modality. The inventive method can be particularly useful for imaging modalities comprising the application of X-ray radiation to a subject or patient, such as X-ray imaging or Computed Tomography (CT), since the amount of available training data for these imaging modalities is typically particularly limited due to the adverse effects of X-ray radiation on the human body, which limits the possibilities of acquiring image data for ethical reasons. However, the method may also be applicable for other medical imaging modalities, such as magnetic resonance imaging (MRI), ultrasound imaging, or positron emission tomography (PET). The method may also be useful for obtaining training data for training image guided therapy (IGT) methods.

The term "synthetic training data" is to be understood broadly in the context of this application. It generally refers to training data that is at least partially generated by other means than by a medical imaging scan with an imaging modality, in particular generated by a software module. For example, synthetic training data may also comprise images that are partially synthetic and partially obtained by an imaging modality. Further, synthetic training data may comprise images that have been derived from images obtained by a medical imaging scan, but which have been processed, for example in order to artificially downgrade the image quality, or in order to generally change the image appearance. The training pair may be provided such that it can be used for training, in particular, supervised training. Alternatively, it may be provided that the training pair is to be used for validation of a trained machine learning algorithm. In the context of this invention, this alternative may also be comprised by the term training data. Hence, the term "training data" may also comprise the provided use for validation purposes.

The training data can be used for training a machine learning algorithm of a software module. A machine learning algorithm may for example be a neural network (NN), in particular a convolutional neural network (CNN). In this context the term "software module" has to be understood broadly, it may generally describe a component of a software architecture that comprises one or several software modules. Optionally, the software module may also be the only software module of a software architecture. The software module is configured for image processing of images acquired by a medical imaging modality. Hence, the software module may comprise program code configured for image processing. In particular, the software module comprises the machine learning algorithm. The term "medical image processing" has to be understood broadly in this context. It generally describes the processing of medical image data, such as reconstructing images, enhancing image quality, removing image artifacts, etc.

The ground truth image is at least partially obtained from image data acquired by an improved variant of the medical imaging modality or another technique than the medical imaging modality. "Partially obtained" can in particular be understood such that one part of the image is obtained by the respective imaging modality or technique. Hence, either a part or the whole of the ground truth image may be obtained from the respective modality or technique. An improved variant of the medical imaging modality can be understood such that at least one aspect of the imaging modality is improved. For example, the improved variant may comprise a better scanner, such as a scanner being capable of scanning with a higher resolution, of producing fewer image artifacts, of achieving a better time resolution and/or of producing images with a lower noise level. For example, real conventional CT images may be acquired with a high-resolution scanner to CT images, and the ground truth images may be processed with AI denoising to obtain the ground truth images. Advantageously, in this example, the high-resolution scanner that these images are acquired with need not be the same scanner type which is used for the imaging modality that the software module is later being used for. The improved variant may also be another model of the same kind of imaging modality that is improved in one aspect. The other model may also be equal or even inferior in some aspect, e.g. in an aspect that is not crucial for the purpose of image quality or for the purpose of a particular aspect of image quality. For example, when a low noise level is to be achieved by training a machine learning algorithm with the training data, a time resolution may potentially not be crucial for the process. The other technique may be another kind of imaging modality. For example, the imaging modality may be an imaging modality based on CT and the other kind of imaging modality may be an imaging modality based on MRI. Another technique may also be understood such that another technical variant of the same imaging modality is used.

The ground truth image may be fully or partially obtained from natural image data. The term "natural image data" is to be understood broadly in the context of this invention and generally describes images that a human being might observe in the real world. For example, the natural images may show a landscape, an object or an animal or a part thereof. For example, the natural image may be a depiction of sand or a depiction of a part of a tiger. Natural images data may, in particular, be or comprise optical images taken with an optical camera, including an infrared camera, and including video streams. Thus, natural images may also comprise frames taken from optical/natural videos. As such, the term "natural image data" may describe image data that is not acquired by a medical imaging modality, in particular not by an imaging modality of the same kind as the medical imaging modality for which the training data is to be used. Surprisingly, it has been found, that training data generated from natural images can be used for achieving viable training results, hence rendering the provision of actual medical images unnecessary. Hence, when using natural image data, access to high-resolution imaging data, such as CT projection data acquired with high an X-ray dose, is not necessarily required. Advantageously, natural image data can typically be provided in large quantities and with high resolution and only little noise. Accordingly, many training pairs with very good image quality, in particular high resolution and low noise, can be provided relatively easily. The high image resolution that can be obtained with natural images, typically being higher than what may be obtained by medical imaging modalities based on X-ray (e.g., due to dose limitations) can have the fundamental advantage to enable the machine learning algorithm not only to improve a perceived image sharpness but also to improve the real physical spatial resolution. Hence, in some cases, with natural image data, even beyond the advantage of having more training data, the training effect may also be improved due to the quality of the training data. Prior to their application, the natural images may be converted to a particular color coding corresponding to a typical color coding of the medical imaging modality, e.g. a grey scale. Additionally or alternatively, the training data based on the natural image data may also be used to complement training data based on images obtained by medical imaging modalities.

In order to obtain the input training image, the image quality of the ground truth image is downgraded. Hence, the input training image is a downgraded version of the ground truth image. Downgrading may generally be understood to be any kind of decreasing of image quality and/or of perceivable image information. The downgrading may be chosen to correspond to one or several image degradations typically associated with the medical imaging modality. Hence, the downgrading may be chosen depending on what kind of medical imaging modality and/or what quality level of medical imaging modality is to be used. The downgrading may be thus, that the image quality of the downgraded image corresponds to the typical image quality of the images attainable by the medical imaging modality. Hence the training pair may be suitable to train the machine learning algorithm to improve the image quality of the images from the medical imaging modality. Advantageously, the input training image may thus be generated based on the ground truth image.

According to an embodiment, downgrading image quality comprises adding noise to the image data, adding image artifacts to the image data and/or lowering the resolution of the image data. When image artifacts are added, the training pair may be suitable for training of a machine learning algorithm to reduce or remove image artifacts. In CT-related cases the image artifacts may, for example, be cone-beam artifacts. Adding noise may be used to produce training pairs for training a machine learning algorithm to reduce or remove noise. For example, noise may be added by adding noise with statistical characteristics typical for the imaging modality, e.g. statistical characteristics typical for CT images. Lowering the resolution may be used to produce training pairs for training a machine learning algorithm to improve image resolution and/or deblur and sharpen an image. In particular, the lowering and/or the lowering of resolution may be applied directly on an image or for projected image data as described herein. For example, the loss of resolution or the blurring may be achieved by application of a system point spread function (PSF). Additionally or alternatively, additional downgrades may be applied. For example, in addition or alternatively to the above-mentioned downgrades, motion may be added to the image data. For example, motion can be generated either by means of using dynamic content from natural videos. The downgrading may comprise applying only one of the downgrades or a combination of several of the downgrades.

According to an embodiment, downgrading the image quality comprises:
- forward projecting the image data into a projection space of an artificially designed imaging modality,
- downgrading the image quality of the projected image data in the projection space,
- reconstructing the projected and downgraded image data back into image space.

Preferably the artificially designed imaging modality is designed to be capable of providing higher image quality than the medical imaging modality. For example, the artificially designed imaging modality may have a higher spatial resolution, which may in particular correspond to a smaller pixel/voxel size in the physical space. In the context of this invention, projection space is to be understood broadly. Projection space may describe any kind of image space that corresponds to raw image data as obtained by the artificially designed imaging modality, in particular image data as it is before image reconstruction. Projection space may also be termed as projection domain. For example, in the case of CT imaging, the projection space may be the imaging space comprising the X-ray projections as detected by the X-ray detector of the CT system. A higher spatial resolution of a CT system may correspond to smaller detector pixels. Hence, the projection space is designed thus to simulate the projection space of a corresponding imaging modality. It has been found that downgrading the image quality in the projection space may lead to a more realistic image degradation than downgrading directly in image space. This is due to the fact that the downgrading is applied in a more "raw state" of the data, and therefore corresponds better to realistic image downgrades. By forward projecting the image back into image space, the artificial loss in quality is not quite as "obvious" for an image improvement algorithm. The algorithm therefore has to learn to handle realistic imaging problems. For example, a more realistic loss of resolution or a more realistic noise may be simulated. Accordingly, the training data obtained via this embodiment may thus lead to better training effects, such as a more robust trained algorithm that can handle realistic problems particularly well.

Alternatively, when image data acquired by the improved variant of the medical imaging modality is available in the projection space state, the step of forward projecting into projection space may be omitted and the data may be directly treated in projection space. This approach may, for example, be advantageous, if a high-resolution CT scanner is available. In this case, one may directly acquire CT raw data with high resolution and simulate low-resolution/-exposure data in the projection space. Hence, instead of receiving a ground truth image, image data in projection space may be received and downgrading the image quality may comprise:
- downgrading the image quality of the image data in projection space,
- reconstructing the downgraded image data into image space.

According to an embodiment, in projection space, the image quality is downgraded by down-sampling the projected image data to a lower image resolution, in particular an image resolution obtainable by the medical imaging modality. For example, in case of a CT system, a lower spatial resolution of a CT system may correspond to larger detector pixels.

According to an embodiment, in projection space, the image quality is downgraded by performing a low-dose simulation that introduces noise corresponding to the medical imaging modality. Medical imaging modalities may have their own characteristic types of noise discernible from other types of noise. For example, noise may have a characteristic distribution in frequency space. For different modalities, the power of noise for different frequencies may differ. Hence, in order to create realistic data, it may be advantageous to apply a corresponding noise typical for the imaging modality. The noise may be even more realistic when applied in projection space, i.e. corresponding to the noise of the raw data, instead of trying to apply noise in the reconstructed image.

According to an embodiment, the ground truth image is at least partially obtained from image data taken from a natural video, wherein the time dimension of the natural video is translated into a third spatial dimension in order to obtain three-dimensional image data. Advantageously, natural videos may provide high image resolutions and low noise levels and are thus well-suited for this purpose. The time dimension of the video (i.e. a third dimension) may be used to generate data for the third dimension of three-dimensional image data, i.e. a three-dimensional image volume. Using natural videos in this way may thus advantageously allow to generate synthetic training data even for three-dimensional volumes, with relatively low required effort. Prior to their application, the natural videos may be converted to a particular color coding corresponding to a typical color coding of the medical imaging modality, e.g. a grey scale.

According to an embodiment, the ground truth image is generated by receiving a medical image obtained by the medical imaging modality or another medical imaging modality and replacing at least one part of the medical image with at least one image part taken from another image source, in particular from at least one natural image. Preferably several or all parts may be replaced. Accordingly, the ground truth image is partially synthetic and partially based on a real medical image. In particular, the ground truth image may retain the basic structures of the medical image, but replace the content of the structures with textures obtained from another image source, in particular from one or several natural images. Replacing parts of the medical image allows to provide a greater number of training data while still maintaining a realistic anatomical structure in the image. Hence based on a small number of available training data sets a larger number of training data sets can be generated. It has been found that using natural images can be particularly advantageous due to the typically more diverse fine structure and textures on natural images. Thus, a rich variety of data may be generated. The training with these partially substituted images can lead to even trained algorithms that are even more robust by profiting from the varied structures of the natural images.

According to an embodiment, replacing at least one part of the medical image comprises:
- segmenting at least one anatomical structure of the medical image, in particular at least one organ, in order to create at least one segmentation mask,
- replacing the image data of the medical image within the at least one segmentation mask with the at least one image part of the at least one image taken from another source, in particular from at least one the natural image.

The step of segmenting may be performed according to approaches as known in the state of the art. In particular the approach may be based on the application of trained convolutional networks. An example, of a segmentation approach that may be applied here similarly or with variations is TotalSegmentator as published by Jakob Wassertahl et al. in "TotalSegmentator: robust segmentation of 104 anatomical structures in CT images", arXiv:2208.05868 [eess.IV], 2022. Accordingly, it is possible to segment nearly all organs in the human body. This approach can be most beneficial when multiple segmentations, preferably as many segmentations as possible, are applied. Applying more segmentations and thus replacing more parts of the images can lead to more varied training data and thus better training results. However, the method may already be beneficial when applied with only a few or even only one segmentation. The step of segmenting may in particular produce an image set comprising the medical image and the segmentation mask. Replacing the image data may comprise cropping the image data within the segmentation mask and then pasting the image from the other source, in particular the natural image, into the segmentation mask. Advantageously, rough estimations for the largest structures, i.e. represented by the at least one segmentation mask, can be taken from actual scans by the medical imaging modality and, additionally, fine grained structures from high quality natural images can be filled into these structures. Thus, this embodiment may allow to gain rich and high-quality structures (e.g. of natural images) without breaking common placement rules of organs within the human body (due to the segmentation masks that can ensure that the general structure of a realistic medical image is conserved). This can be crucial for simulating different modality-specific artifacts and training machine learning algorithms to solve modality-specific image formation problems.

According to an embodiment, regions outside the at least one segmentation mask are clustered together into at least one cluster region and wherein pixels or voxels within the same cluster region are attributed a constant pixel or voxel value, optionally the mean value of the original pixels or voxels within the cluster region. In many cases, segmenting every organ on the medical image may not be feasible. Thus, for the rest of the medical image, the clustering according to this embodiment can be applied. This may allow to even fill in the areas that are not segmented. For example, pixels or voxels in one cluster may be assigned the mean value within the cluster region. This my result in a piece-wise constant approximation of the non-segmented area. Advantageously, the assignment of pixel or voxel values may further allow a labelling of the corresponding region. Clustering and applying a new pixel/voxel value has the advantage that the connection to the original patient the image was taken from can be reduced. On the one hand, a more diverse training data set may thus be produced. On the other hand, the privacy rights of the original patient may thus be better protected.

According to an embodiment, the dynamic range of the at least one image part of the at least one natural image is adjusted based on the dynamic range of the medical image data within the segmentation mask. This embodiment may also be applied when the image part is taken from any other source, i.e., not from a natural image. Depending on the corresponding medical image and depending on the respective part, e.g. organ, that is segmented, the dynamic range of the original part of the medical image may be different. For example, some body parts may appear bright and other body parts may appear rather dark. Furthermore, the typical variety in brightness and/or contrast within different segmentations may be different. On the other hand, random natural images may have different dynamic ranges. Accordingly, by adjusting the dynamic range of the image part taken from the natural image, the outcome may be more realistic such that the synthetic image will have dynamic ranges that are comparable to real medical images. This may lead to better training results when training a machine learning algorithm with the corresponding training data. For example, in a first sub-step, the dynamic range of the medical image data within the segmentation mask may be calculated based on the original imaging data values. In a following sub-step, the dynamic range of the image part may be adjusted. For example, the adjustment may be provided by matching histograms of the dynamic ranges and/or by rescaling the dynamic range according to quantiles of the dynamic range distribution. Additionally or alternatively, the image part may be further adjusted. For example, the image part may be flipped, rotated and/or deformed. This may provide training data that are even more rich in variety.

According to an embodiment, prior to replacing the image data with the image part, at least one property of the segmentation mask is changed within a predefined boundary. Changing a property of the segmentation mask may advantageously allow to provide a more varied dataset. For example, this way, a limited set of imaging data can be extended into a much bigger and richer one. A predefined boundary may be defined such that the change is still within realistic properties. In particular, the shape, position, orientation and/or size of the at least one segmentation mask may be changed. The position may be changed by shifting the segmentation mask within the medical image. The maximum allowable shift may be constricted, e.g. relative to the size of the segmentation or by an absolute value. The orientation of the segmentation mask may be changed by rotating the segmentation mask. The rotation may be restricted by a maximum allowable rotation, e.g. a certain value given in degree. The size of the segmentation mask may be changed by resizing the mask. The resizing may be restricted by a maximum allowable increase or decrease in size, e.g. relative to the original size of the segmentation mask. The shape of the segmentation mask may, for example, be changed by distorting the segmentation mask. It is possible to apply one, several or all of the changes of shape, position, orientation, and size. Further properties may be changed as, well, e.g. the dynamic range within the segmentation mask may also be adapted, e.g. by a percentile of the original dynamic range within the segmentation mask. The change may be performed randomly within the predefined boundary. It may be chosen randomly, which of the changes, i.e. comprising changes of shape, position, orientation, and/or size, may be applied. It may be chosen randomly, how many of the changes are applied.

According to another aspect of the invention, a computer-implemented method for providing a synthetic training image, in particular a ground truth image, for training a machine learning algorithm that is used for image processing of images acquired by a medical imaging modality is provided. The method comprises the following steps:
- receiving a medical image obtained by the medical imaging modality or another medical imaging modality; and
- replacing at least one part of the medical image with at least one image part taken from at least one image from another image source, in particular from at least one natural image, in order to generate the synthetic training image.

The synthetic training image may then be provided. Furthermore, a corresponding input training image may be generated by downgrading the synthetic training image as described herein. Natural images can be particularly advantageous as replacement image part, due to their typically rich texture and potentially high resolution together with relatively low noise level. However, generally other sources for the at least one image part are generally also conceivable.

According to an embodiment, replacing at least one part of the medical image comprises:
- segmenting at least one anatomical structure of the medical image, in particular at least one organ, in order to create at least one segmentation mask,
- replacing the image data of the medical image within the at least one segmentation mask with the at least one image part of the at least one image from another image source, in particular of the at least one natural image.

According to an embodiment, regions outside the at least one segmentation mask are clustered together into at least one cluster region and pixels or voxels within the same cluster region are attributed a constant pixel or voxel value, optionally the mean value of the original pixels or voxels within the cluster region.

According to an embodiment, the dynamic range of the at least one image part is adjusted based on the dynamic range of the medical image data within the segmentation mask.

According to an embodiment, prior to replacing the image data with the image part, at least one property of the segmentation mask is changed within a predefined boundary, wherein in particular the shape, position, orientation and/or size of the at least one segmentation mask is changed.

According to another aspect of the invention, a method for generating training weights to be used in a software module comprising a machine learning algorithm is provided. The training weights are generated by training the machine learning algorithm with the synthetic training data as obtained according to the method for generating synthetic training data described herein. The machine learning algorithm may optionally be trained with additional training data, e.g. based on real medical image data. The machine learning algorithm may be trained to correct cone-beam artifacts of CT image data. The machine learning algorithm may be trained to perform a deblurring of image data. The machine learning algorithm may be trained perform the deblurring in image space with reconstructed image data or in projection space, in particular with raw image data as obtained by the imaging device. Training data in projection space may be generated by forward projecting image data from image space into projection space. The machine learning algorithm may be trained to perform an up-sampling of the image data to a higher image resolution. The machine learning algorithm may be trained perform the up-scaling in image space with reconstructed image data or in projection space, in particular with raw image data as obtained by the imaging device. The machine learning algorithm may be trained to perform a motion correction of the image data. Motion in the training data may be generated by manipulating segmentation masks (e.g., shifting, rotating, and/or distorting the masks) or using dynamic content from natural videos.

According to another aspect of the invention, the training weights generated by the method for generating training weights as described herein are provided. Hence, the training weights may be the results of training the machine learning algorithm with the training data as

According to another aspect of the invention, a non-transitory storage medium having stored thereon the training weights generated by the method for generating training weights as described herein is provided. For example, the storage medium, and/or and storage medium mentioned herein, may be an optical storage medium, a magnetism-based storage medium, a magneto-electronic storage medium, a magneto-optical storage medium, or a solid-state medium, etc.

According to another aspect of the invention, a software module with a machine learning algorithm comprising the training weights as described herein is provided.

According to another aspect of the invention, a non-transitory storage medium having stored thereon a software module with a machine learning algorithm comprising training weights generated by the method for generating training weights as described herein is provided.

According to another aspect of the invention, a use of the software module as described herein and/or the training weights as described herein and/or the non-transitory storage medium having stored thereon the training weights as described herein for image processing of medical image data obtained by a medical imaging modality is/are provided.

Advantageously, since a greater amount of training data can be provided by using the synthetic training data, the quality of the trained machine learning algorithm of the software module can be better. Furthermore, it has been found, that using natural images as basis for training data as described herein, the robustness of the machine learning algorithm can be better, even when comparable amounts of training data are applied, which may be attributed to the more varied structural details of natural images. Hence, the provision of the synthetic training data can have an effect still even on the trained algorithm during its application.

According to another aspect of the invention, an image processing device comprising the software module as described herein and/or the non-transitory storage medium having stored thereon a software module as described herein is provided. The image processing device may, for example, be a personal computer, a tablet, a smart phone, a server, or a control unit of a medical imaging system.

According to an embodiment, the image processing device is configured to enhance the image quality of a medical image region, the medical image region comprising medical image data acquired by a medical imaging modality. The image processing device may in particular be configured to perform the following steps:
(a) receiving image data from within the medical image region;
(b) applying a denoising algorithm on the image data of the medical image region in order to produce denoised image data (5);
(c) applying a deblurring algorithm on the denoised image data (5) in order to produce enhanced image data;
(d) providing the enhanced image data.

The term "medical image region" is to be understood broadly in the context of this invention. It generally describes a region of a medical image. The region may extend over the entire medical image or only over part of the medical image. The medical image region may be a two-dimensional region or a three-dimensional region. Correspondingly, the medical image may be a two-dimensional image or a three-dimensional image, which may also be described as a (three-dimensional) image volume. The image data may, for example, be received from an external storage device or server, from an imaging modality (e.g., directly after obtaining it), from within the image processing device itself that performs the method, and/or from another source. The denoising algorithm may be configured to output image data with reduced noise based on input image data. "Image data with reduced noise" may also comprise noiseless image data. Preferably, the denoising algorithm may be a trained machine learning algorithm, in particular a trained neural network. In principle, any kind of denoising algorithm may be applied. For example, the denoising algorithm may be configured to directly determine the noise-reduced image. Alternatively, the denoising algorithm may be configured to determine the noise of the input image. In this alternative, the noise may be subtracted from the input image in order to get the noise-reduced image. The term "deblurring algorithm" is to be understood broadly in the context of this invention. It may generally refer to any algorithm that enhances the image data, in particular such that a user can recognize more information in the medical image region or can recognize information in the medical image region more easily. The deblurring algorithm may be configured to provide the image data with more recognizable details and/or in a less blurry state. It has been found that in many cases image data comprise information that is not visible for the perception of the human eyes. Yet, since the information is stored within the image data, it is possible to enable recognizing this information via the deblurring algorithm. Enhancing the image, e.g. enhancing anatomical structures within the image region, may enable a user, such as a radiologist, to provide a faster and more confident diagnosis of a given pathology. For example, a standard size grid reconstruction (e.g. 512x512 in the axial plane), may be not fine enough for the user to fully exploit the image information. Providing an enhanced image, e.g. anatomic structures in more detail, may thus allow a user to provide a better analysis and diagnosis. For example, enhancing the image data may be performed such that it simulates the medical image region being reconstructed on a finer size grid. It has been found that the possibility to determine and enhance this information via the deblurring algorithm can depend critically on reducing noise of the image via the denoising algorithm before, such that considerably better results may be achieved. Advantageously, the denoising algorithm and/or the deblurring algorithm may be trained with training data as described herein.

According to an embodiment, the image processing device is configured to provide medical image data to a user, the image data being acquired by a medical imaging modality. The method comprises the following steps:
- providing an image reconstruction of the medical image data to the user on a screen and a user interface with at least one input device that allows the user to select a region of interest within the image reconstruction;
- receiving the selection of the region of interest and, based on the selection, generating image data of within the region of interest;
- enhancing the image quality of the image data within the region of interest in order to generate enhanced image data, optionally according to the embodiment for enhancing the image quality of a medical image region as described herein;
- providing an image reconstruction of the medical image data to the user on the screen or on another screen, wherein the image reconstruction within the region of interest is based on the enhanced image data.

Advantageously, according to this embodiment, data processing times and associated hardware costs may be reduced. It has been recognized that for some clinical applications high spatial resolution is not necessarily required in all segments of a reconstructed image/volume. In particular, not all clinical applications require a high-resolution representation (compared to the possibilities of imaging modalities, such as computed tomography) of some or all the data to achieve a sufficient degree of diagnostic confidence for a particular disease. Therefore, for high-resolution imaging modalities, e.g. high-resolution CT systems, it is often redundant to reconstruct, transmit and store such large amounts of image data. Hence, particular image structures of within the region of interest may be enhanced selectively. With this method, this aspect may be used to enable data representations that may be advantageous in terms of required data storage and data transmission. Thus, the reconstruction, transmission, and/or storage footprint of the respective data may be reduced.

The features and advantages of different embodiments can be combined. The features and advantages of one aspect of the invention, e.g., the method for generating synthetic training data, may be applied to the other aspects, e.g., the method for generating training weights, the training weights, the software module, the image processing device, the use, and/or the non-transitory storage mediums, and vice versa.

### BRIEF DESCRIPTION OF THE DRAWINGS

The invention shall now be illustrated by means of embodiments with reference to the attached drawings, in which:
Fig. 1. shows a flow diagram of a computer-implemented method for generating synthetic training data for training a machine learning algorithm of a software module for image processing of images acquired by a medical imaging modality according to an embodiment of the invention;
Fig. 2. shows a diagram of a computer-implemented method for generating synthetic training data for training a machine learning algorithm of a software module for image processing of images acquired by a medical imaging modality according to another embodiment of the invention;
Fig. 3. shows a flow diagram of a computer-implemented method for generating synthetic training data for training a machine learning algorithm of a software module for image processing of images acquired by a medical imaging modality according to another embodiment of the invention;
Fig. 4. shows examples of images that are process by a method according to an embodiment of the invention at different stages of the processing;
Fig. 5. shows a diagram of a method for generating training weights to be used in a software module comprising a machine learning algorithm;
Fig. 6. shows, on the top, a noisy simulated clinical scan image and, on the bottom a denoised image version, after application of a trained de-noising model, that was trained with training data generated with a method according to the invention; and
Fig. 7. shows, on the top, another noisy simulated clinical scan image and, on the bottom a denoised image, after application of a trained de-noising model, that was trained with training data generated with a method according to the invention.

### DESCRIPTION OF EMBODIMENTS

Throughout the Figures, the same or corresponding features/elements of the various embodiments are designated with the same reference numbers.

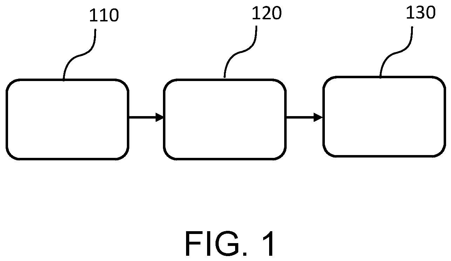

Fig. 1 shows a flow diagram of a computer-implemented method for generating synthetic training data for training a machine learning algorithm 1 of a software module for image processing of images acquired by a medical imaging modality according to an embodiment of the invention. In a first step 110, a ground truth image 5 is received. The ground truth image 5 is at least partially obtained from image data acquired by an improved variant of the medical imaging modality or another technique than the medical imaging modality. Preferably, the ground truth image 5 may be a high-resolution noiseless image, optionally a 3D image volume. In particular the ground truth image 5 may be taken from natural image data. In an advantageous optional variant, the ground truth is at least partially obtained from image data taken from a natural video. In this variant, the time dimension of the natural video is translated into a third spatial dimension in order to obtain three-dimensional image data. Hence, the time-domain of the video may be used to generate a third spatial dimension of the image data. In a further step 120, the image quality of the ground truth image 5 is artificially downgraded in order to obtain an input training image 6. Downgrading may, for example, comprise on or several of adding noise to the image data, adding image artifacts to the image data, and lowering the resolution of the image data. In a further step 130, the input training image 6 is provided together with the ground truth image 5 as a training pair for the training data.

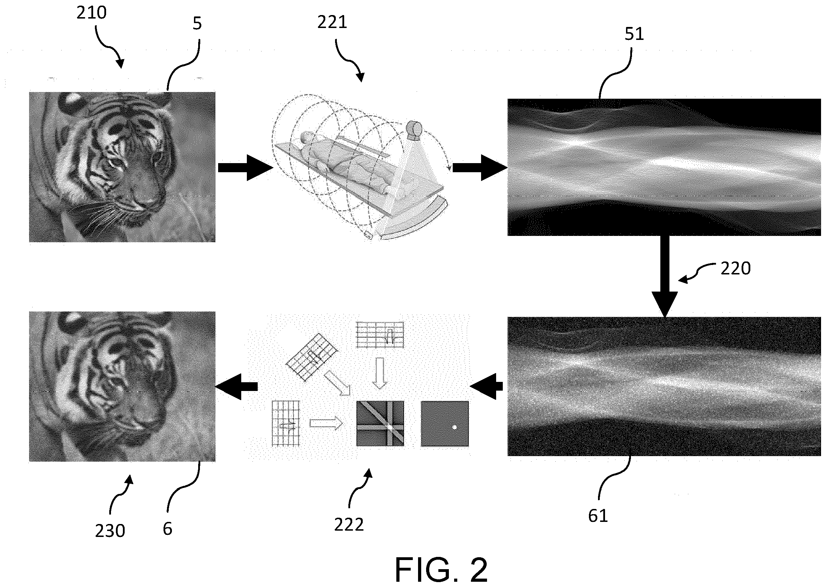

Fig. 2 shows a diagram of a computer-implemented method for generating synthetic training data for training a machine learning algorithm 1 of a software module for image processing of images acquired by a medical imaging modality according to another embodiment of the invention. In a first step 210, a ground truth image 5 is received. In this example, the ground truth image 5 is a natural image 3, i.e., in this case, an optical image of a tiger head. Generally, an image from another source, preferably a high-resolution image may also be used, instead. Optionally, the ground truth may be at least partially obtained from image data taken from a natural video, such that the time dimension of the natural video is translated into a third spatial dimension in order to obtain three-dimensional image data, i.e. a three-dimensional image volume. In a further step 221, the image data, i.e. here the ground truth image 5, is forward projected into a projection space of an artificially designed imaging modality, such that projected image data 51 is generated. The artificially designed imaging modality may, for example, be a computed tomography detector with artificially high resolution. In a further step 220, the image quality of the projected image data 51 is downgraded in the projection space. This is done by down-sampling the projected image data 51 to an imaging modality with lower resolution. Furthermore, a low-dose simulation is applied in order to introduce noise into the image data. As a result, noisy low-resolution projected image data 61 is obtained. This embodiment may also be applied to only reduce the resolution or only apply noise. In a further step 222, the projected and downgraded image data 61 is than reconstructed back into image space, in order to obtain an input training image 6. The input training image 6 is more blurred and noisier compared to the ground truth image 5. In a further step 230, the input training image 6 is provided together with the ground truth image 5 as a training pair for the training data.

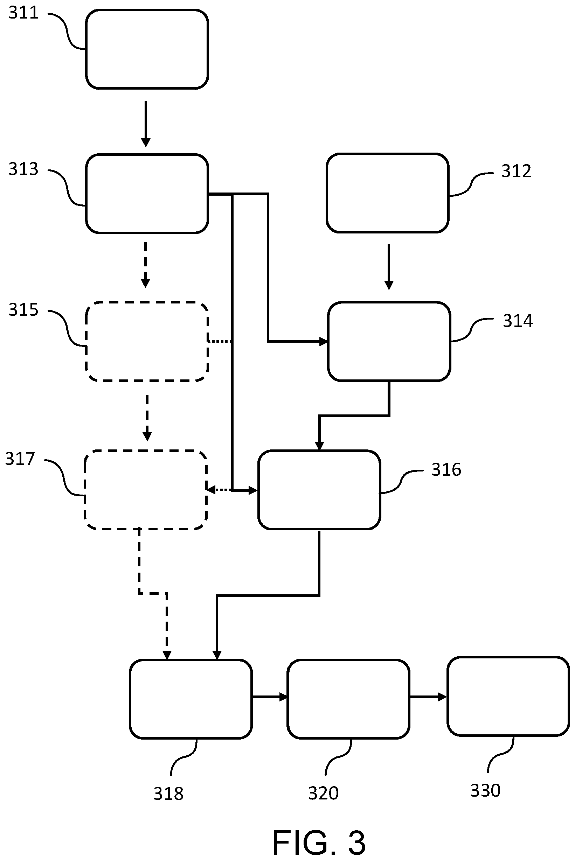

Fig. 3 shows a flow diagram of a computer-implemented method for generating synthetic training data for training a machine learning algorithm 1 of a software module for image processing of images acquired by a medical imaging modality according to another embodiment of the invention. In a first step 311, a medical image obtained by the medical imaging modality or another medical imaging modality is received. Furthermore, in another step 312, natural image data, i.e. on or several natural images 3 or one or several parts of one or several natural images 3, is received. The natural images 3 may be augmented and/or rescaled. Augmenting may, for example, comprise flipping, rotation, and/or deformation. In a further step 313, anatomical structures of the medical image, for example including one or several organs, are segmented in order to create segmentation masks 10. For example, a segmentation method using a convolutional neural network (CNN) as known in the state of the art may be applied to generate the segmentation mask 10. In a further step 314, the dynamic range of the one or several natural images 3 or parts of natural images 3 are adjusted based on the dynamic range of the medical image data within the segmentation masks 10, respectively. For example, the dynamic range within the segmentation mask 10 may be calculated based on the original imaging values and the dynamic range of the natural image 3 or part of the natural image 3 may then be adjusted based on this calculation. For example, it may be adjusted by matching histograms or via a rescaling according to quantiles. Optionally, in an optional step 315, at least one property of the respective segmentation masks 10 may be changed within a predefined boundary. For example, the shape, position, orientation and/or size of the segmentation masks 10 may be changed. In a further step 316, the image data of the medical image within the segmentation masks 10 are replaced with the natural images 3 or parts of the natural images 3. Preferably, choosing the natural image 3, adjusting the dynamic range, and replacing the region of the segmentation mask 10 is applied for each segmentation mask 10 separately. In a further optional step 317, regions outside the segmentation masks 10 may be clustered together into at least one cluster region and pixels or voxels within the same cluster region may be attributed a constant pixel or voxel value. This may be an option, if, for example, segmenting every organ is not feasible in some cases. For example, the constant pixel or voxel value may be the mean value of the original pixels or voxels within the cluster region. In particular if applying several cluster regions, this may result in a piece-wise constant approximation of the non-segmented area. The image that is thus obtained by replacing parts of the medical image with natural images 3 or parts of natural images 3, can then be used to be a ground truth image 5 used for training data. It has been found that the resulting images are high quality ground truth images 5 consistent with real images obtained by the respective imaging modality. Hence, in a further step 318, the ground truth image 5 is provided that is partially obtained from image data acquired another technique than the medical imaging modality. In a further step 320, the image quality of the ground truth image 5 is downgraded to obtain an input training image 6. Finally, in further step 330, the input training image 6 is provided together with the ground truth image 5 as a training pair for the training data.

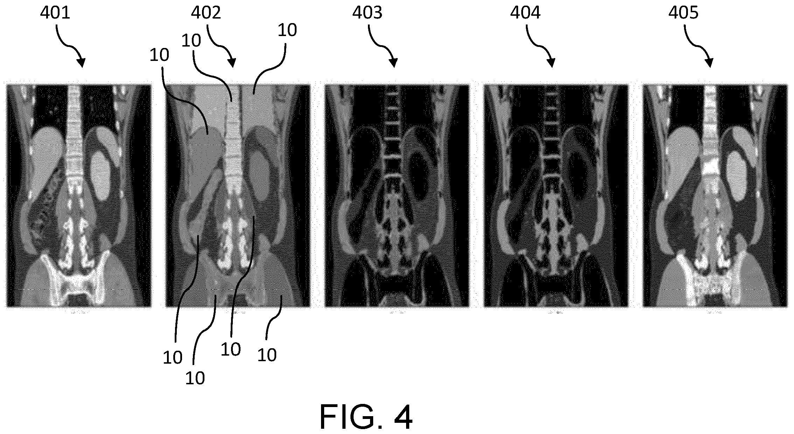

Fig. 4 shows examples of images that are processed by a method according to an embodiment of the invention at different stages of the processing. The first image 401 is a computed tomography image showing several anatomical parts, in particular organs, of the human body. In the second image 402, several segmentation masks 10 are applied marking different anatomical parts of the body. The segmentation masks 10 have been determined with a state-of-the-art CNN-based segmentation method. In the next image 403, the voxels within the segmentation masks 10 are cropped, which is here depicted as black regions. Optionally, in order to generate even more varied data, it would be possible at this stage, to (randomly) shift, rotate, resize one or several or all of the individual segmentation masks 10. This way, a limited set of CT data can be extended into a much bigger and richer one. In the next image 404, the voxels, that are not within the segmentation masks 10 are clustered into two different cluster regions with two colors (here bright grey and dark grey), one for each cluster region, respectively. Within each cluster, the voxels are assigned the mean value of the original voxels within the cluster. In the next image 405, the segmented regions are filled with parts of natural images 3 that have been pasted into the segmentation mask 10. Before pasting the natural image data into the CT scan, the dynamic range has been be adjusted based on the actual CT values within the respective segmentation mask 10. Thus, a synthetic medical image that is different with respect to the structure of the organs, yet has a realistic overall structure and dynamic range, has been provided. Accordingly, the new image is suitable to be used as part of a set of training data for training a machine learning algorithm 1. The resulting images are high quality CT consistent ground truth. Through simulation of different CT attributed degradations one can get a very suitable pair of corrupted-clean images for further learning-based methods, such as CNNs. For example, one can add noise, motion artifacts, etc. to the ground truth images 5.

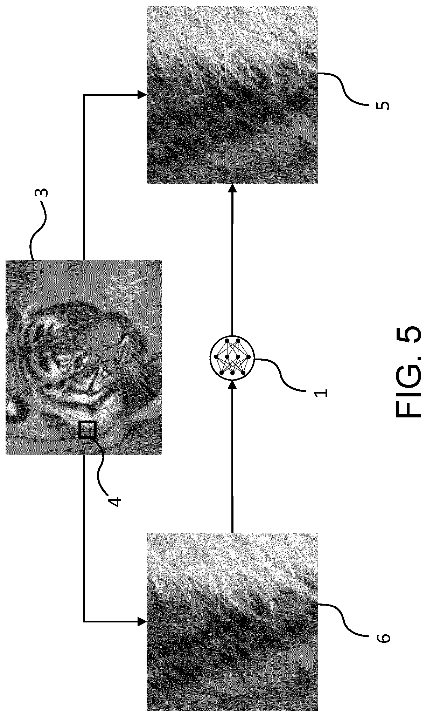

Fig. 5 shows a diagram of a method for generating training weights to be used in a software module comprising a machine learning algorithm 1. The training weights are generated by training the machine learning algorithm 1 with synthetic training data comprising a training pair of a ground truth image 5 and an input training image 6. The synthetic training data is generated based on image data of a part 4 of a natural image 3. The natural image 3 shows a tiger head, and the part 4 of the natural image 3 shows a part of the tiger head. Accordingly, the ground truth image 5 corresponds to the part 4 of the natural image 3. The input training image 6, on the other hand, is a downgraded version of the ground truth image 5, such that the input training image 6 is blurred compared to the ground truth image 5. Accordingly, the machine learning algorithm 1 can be trained with this training pair and more equivalent training pairs.

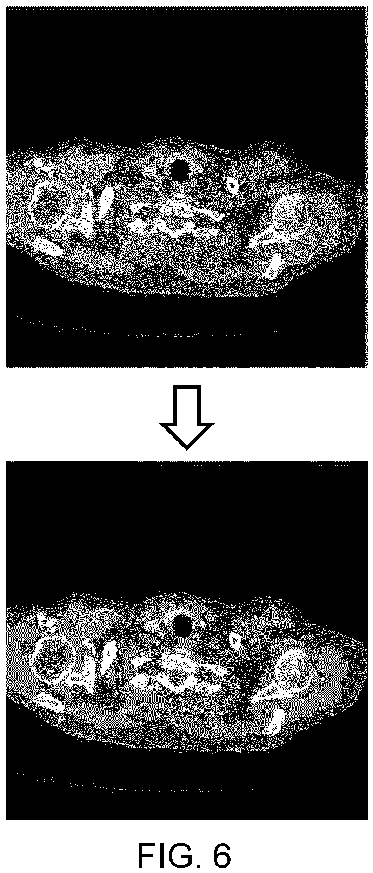

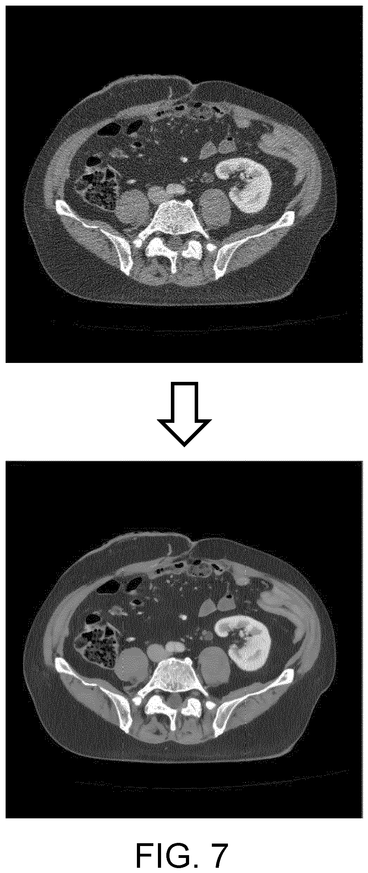

Synthetic training data, generated with a method according to an embodiment of the invention, was tested to verify the usefulness of the inventive approach. For this test example, a de-noising model was trained on seven cases of synthetic images that were generated according to the method as described with respect to Fig. 3. All the training data was based on a single case of a medical image, based on which seven different ground truth images and corresponding training data were generated. Consecutively, the resulting model was applied to a simulated clinical patient case including realistic noise. Results below show the noisy input images and the resulting de-noised images using the created model. Fig. 6 and Fig. 7 show two different examples of the results of the experiments. In both Figures, on the top, a noisy simulated clinical scan image is shown and the denoised image, after application of the trained de-noising model, is shown on the bottom, respectively. In both cases, the reduction of noise in the images, leading to enhanced medical images, is clearly visible. Both example images clearly demonstrate the viability and the value of the proposed synthetic data generation approach for the use case of image denoising. As outlined in the present document, the approach can also be used to train models for correcting other issues or artifacts in medical image data, such as computed tomography data.

The above-discussion is intended to be merely illustrative of the present method and system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS

- 1: machine learning algorithm
- 3: natural image
- 4: part of a natural image
- 5: ground truth image
- 6: input training image
- 10: segmentation mask
- 51: projected image data
- 61: projected and downgraded image data
- 110-130: method steps
- 210-230: method steps
- 310-330: method steps

## Claims

1. A computer-implemented method for generating synthetic training data for training a machine learning algorithm (1) of a software module,
wherein the software module is configured for image processing of images acquired by a medical imaging modality,
the method comprising the following steps:
(a) receiving a ground truth image (5) that is at least partially obtained from image data acquired by an improved variant of the medical imaging modality or another technique than the medical imaging modality, in particular from natural image (3) data;
(b) artificially downgrading the image quality of the ground truth image (5) to obtain an input training image (6); and
(c) providing the input training image (6) together with the ground truth image (5) as a training pair for the training data.

2. The method according to claim 1,
wherein downgrading image quality comprises adding noise to the image data, adding image artifacts to the image data and/or lowering the resolution of the image data.

3. The method according to claim 1 or 2,
wherein downgrading the image quality comprises:
- forward projecting the image data into a projection space of an artificially designed imaging modality,
- downgrading the image quality of the projected image data (51) in the projection space,
- reconstructing the projected and downgraded image data (61) back into image space.

4. The method according to claim 3,
wherein, in projection space, the image quality is downgraded by down-sampling the projected image data (51) to a lower image resolution, in particular an image resolution obtainable by the medical imaging modality.

5. The method according to claim 3 or 4,
wherein, in projection space, the image quality is downgraded by performing a low-dose simulation that introduces noise corresponding to the medical imaging modality.

6. The method according to any one of the preceding claims,
wherein the ground truth image (5) is at least partially obtained from image data taken from a natural video, wherein the time dimension of the natural video is translated into a third spatial dimension in order to obtain three-dimensional image data.

7. The method according to any one of the preceding claims,
wherein the ground truth image (5) is generated by receiving a medical image obtained by the medical imaging modality or another medical imaging modality and replacing at least one part of the medical image with at least one image part taken from at least one natural image (3).

8. The method according to claim 7,
wherein replacing at least one part of the medical image comprises:
- segmenting at least one anatomical structure of the medical image, in particular at least one organ, in order to create at least one segmentation mask (10),
- replacing the image data of the medical image within the at least one segmentation mask (10) with the at least one image part (4) of the at least one natural image (3).

9. The method according to claim 7 or 8,
wherein regions outside at least one segmentation mask (10) are clustered together into at least one cluster region and wherein pixels or voxels within the same cluster region are attributed a constant pixel or voxel value, optionally the mean value of the original pixels or voxels within the cluster region.

10. The method according to any one of claims 7 to 9,
wherein the dynamic range of the at least one image part (4) of the at least one natural image (3) is adjusted based on the dynamic range of the medical image data within the segmentation mask (10).

11. The method according to any one of claims 7 to 10,
wherein, prior to replacing the image data with the image part, at least one property of the segmentation mask (10) is changed within a predefined boundary, wherein in particular the shape, position, orientation and/or size of the at least one segmentation mask (10) is changed.

12. A method for generating training weights to be used in a software module comprising a machine learning algorithm (1),
wherein the training weights are generated by training the machine learning algorithm (1) with the synthetic training data as obtained by any one of the preceding claims.

13. The training weights generated by the method according to claim 12.

14. A software module with a machine learning algorithm (1) comprising the training weights according to claim 13.

15. A use of the software module according to claim 14 and/or of the training weights according to claim 13 for image processing of medical image data obtained by a medical imaging modality.

16. An image processing device comprising the software module according to claim 15.
